# EUROPEAN PATENT APPLICATION

(11) **EP 1 974 980 A1**
(43) Date of publication of application: **01.10.2008**
(21) Application number: 07006523.0
(22) Date of filing: 29.03.2007
(51) Int. Cl.: B60K 35/00, B60R 11/02, G02B 27/01

(54) **Motor vehicle information system**

(71) Applicant: GM Global Technology Operations, Inc., Detroit, MI 48265-3000 (US)
(72) Inventor: Brandt, Peter, 63739 Aschaffenburg (DE); Charle, Heiko, 65428 Rüsselsheim (DE); Sahlbom, Daniel, 46492 Mellerud (SE)
(74) Representative: Daniel, Ulrich W.P.

(57) **Abstract**

The invention relates to a motor vehicle information system comprising at least one holographic information display projector (10) integrated in a structural unit (2) of a motor vehicle cabin.

## Description

The present invention relates to a motor vehicle information system.

Common head-up displays (HUD) can project information content on a wind screen for bringing the information content to the attention of a driver. A head-up display comprises a liquid crystal projector, a light source, e.g. LEDs, for illuminating the liquid crystal projector and a plurality of optical elements. Static diffractive optic elements can be used instead of normal lenses and mirrors. Adapted optical elements are installed in the head-up display for adapting the projector to different wind screen models.

The outer dimensions of the head-up display are determined by the plurality of optical elements needed to perform a distortion-free projection. Therefore, the projectors are placed in areas providing sufficient space to accommodate the head-up display.

It is an object of the present invention to provide a display which can be installed in a vehicle more easily.

According to the invention a motor vehicle information system comprises at least one holographic information projector integrated in a structural unit of a motor vehicle's cabin.

An idea of the present invention is to replace the head-up-display-projectors and use a holographic information display projector instead.

The holographic information display projector can be manufactured with a housing of a volume of less than 500 cm³, 200 cm³, or 100 cm³.

According to one embodiment the structural unit is a back mirror.

According to a further embodiment the structural unit is one of an instrument hood and a console device.

According to a further embodiment the structural unit is one of a dashboard area, an instrument hood, and a console instrument, an armrest, a gear shift tunnel, hat shelf, a head restraint, and a ventilation nozzle.

According to an embodiment the at least one holographic information display projector is mounted to the structural unit by at least one offer snap fit and a suction cup.

According to an embodiment a light output of the at least one holographic information display projector is directed towards one of a wind screen, a rear window, a side window, a rear mirror, a mirroring element arranged on the console, a mirroring element arranged on the middle console of the motor vehicle.

According to an embodiment the at least one holographic information display projector comprises a receiver for receiving at least one information content, an image processing unit determining a hologram of a display indicating the at least one information content, a spatial light phase modulator generating the determined hologram and a coherent light source emitting towards the spatial light phase modulator for projecting a reconstructed hologram of the display to present the at least one information content.

The present invention will be explained in greater detail by exemplary embodiments and along with figures:
- Fig. 1: illustrates an embodiment concerning a back mirror; and
- Fig. 2: illustrates a holographic projector used in the embodiment of fig. 1.

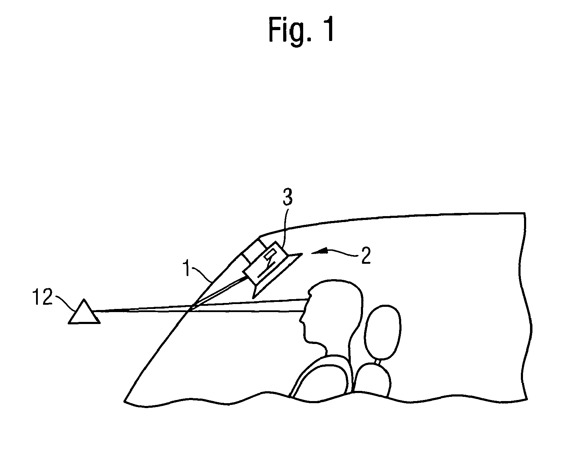

An embodiment is illustrated along with figure 1. A back mirror 2 is mounted on a windscreen 1 of a motor vehicle. The mirror 2 has a housing 3 which holds the mirror in place, and contains mechanical elements to justify the orientation of the mirror 2.

The size of the housing is of a volume of less than 100 cm³, typically. The dimensions are not meant to be limiting, the housing 3 may have a volume in the range of 50 to 500 cm³.

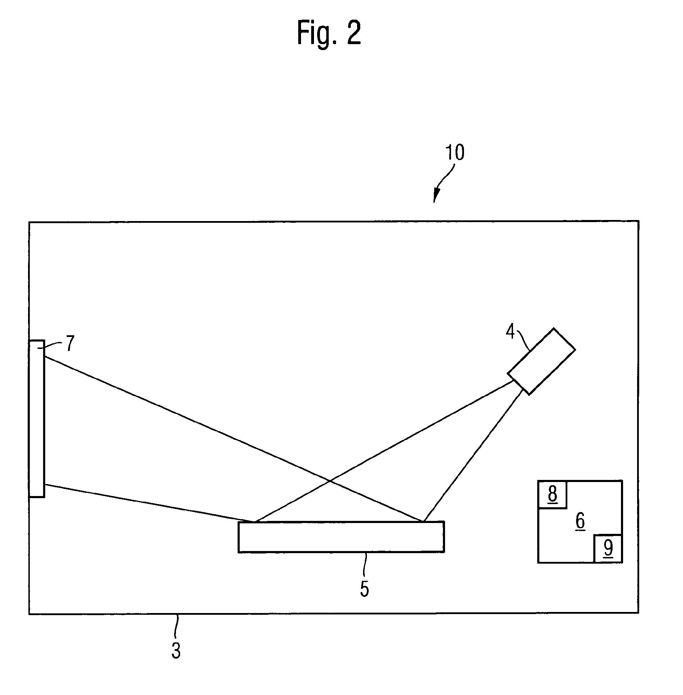

Inside the housing 3 a holographic information display projector 10 is integrated. The holographic information display projector is illustrated in greater detail in figure 2. Inside the housing 3 a coherent light source 4, a spatial light phase modulator, a control unit, and a window 7 or aperture of the holographic information display projector 10.

The coherent light source 4 emits a light of a predetermined wave length and a predetermined wave front in direction to the spatial light phase modulator 5. According to the illustrated embodiment light is reflected by the spatial light phase modulator towards the window 7.

The spatial light phase modulator comprises a plurality of light phase modulators arranged in a plane. The light phase modulators may form a matrix of light phase modulators, i.e. they are arranged in rows and columns. Each of the light phase modulators can be controlled individually to apply an individual phase delay on the parts on the wave front falling onto the respective light phase modulator.

The wave front of the light reflected by the spatial light phase modulator 5 can thus be controlled to have any shape. The front wave can be changed in time by changing the control signals applied to the individual light phase modulator.

The control signals for the individual light phase modulator are provided by the control unit 6. The control unit 6 may incorporate a receiver unit 8 for receiving a hologram. The wave front pattern of this hologram is transformed to control signals by the control unit 6. These control signals are transferred from the control unit 6 to the spatial light phase modulator 5. The spatial light phase modulator 5 generates a diffractive pattern by the light phase modulators corresponding to the hologram.

Consecutively to the generation of the diffractive pattern according to the hologram 8, the coherent light source 4 reconstructs the hologram, i.e. generates a wave front corresponding to a wave front superimposed by the light of several objects corresponding to the hologram. A spectator, e.g. a driver of a motor vehicle, "sees" the objects due to the reconstructed hologram like corresponding real objects.

The control unit 6 may comprise an image processing unit 9 for determining a hologram of two- or three-dimensional objects. The shape of this object may be received via a receiver. A further embodiment includes a data processing unit which determines an object to be displayed based on an information content transmitted to the receiver of the control unit 6. The data processing unit may directly determine a hologram without the intermediate of first determining an object to be displayed and consecutively determining a corresponding hologram.

The dimensions of the housing 3 of the holographic information display projector 10 can be reduced to less than 200 cm³, 100 cm³, 50 cm³. An integration of the projector 10 into a back mirror mounted at the wind screen 1 is feasible. The holographic information projector 10 is orientated such that it emits in a direction towards the wind screen 1. The light is partly reflected by the wind screen 1 into the visual field of the driver. The driver has the impression to see a real object 12 behind of the wind screen 1. The use of the holographic projector 10 allows to place the object 12 in different virtual distances to the driver, or to display objects of a three-dimensional form, i.e. having a depth.

The holographic information projector 10 arranged in the mirror can be orientated towards the side window of the vehicle. The information content displayed may include images taken by a rear view camera and/or data of distance sensors arranged in the rear area of the vehicle. The driver obtains an enhanced view by combining the side view, the image of the side mirror and the holograms brought into his sight field. The holographic information projector 10 may be switched of when a driver looks through the wind screen and switched on when the driver looks through the side window. A tracking device may observe the head motion of a driver to provide the respective switching signal. The holographic information projector 10 may be switched synchronously to a blinker.

The holographic information projector 10 arranged in the mirror can be orientated towards the rear window of the vehicle. This feature may be used to display information content when driving backwards, e.g. in a parking situation.

In other embodiments the holographic information display protector 10 is integrated in the dashboard. A projector may be arranged in the area of the dashboard behind the steering wheel. The projector may be orientated to project towards the wind screen 1. The dashboard may have the projector incorporated.

In a further embodiment the projector is placed below the dashboard close to the ventilation nozzles in the area of the wind screen. The projector is orientated and arranged such that it emits through the ventilation nozzle towards the wind screen into the visual field of the driver.

In a further embodiment the projector is implemented in the inner roof of the vehicle. Other mounting possibilities are a hat shelf, a head restraint, an arm rest of the driver or co-driver, a gear shifter tunnel, in the middle console, or instruments arranged in the middle console.

A head restraint, a hat shelf, and an arm rest can be manufactured having the projector incorporated.

A housing of the holographic projector 10 can be chosen in any of the embodiments according to the housing 3 described along with the back mirror.

## Claims

1. A motor vehicle information system comprising at least one holographic information display projector (10) integrated in a structural unit (2) of a motor vehicle cabin.

2. The motor vehicle information system according to claim 1, wherein the structural unit (2) is a back mirror.

3. The motor vehicle information system according to claim 1, wherein the structural unit is in one of an instrument hood and a console instrument.

4. The motor vehicle information system according to claim 1, wherein the structural unit is one of a dash board area, a door covering, a centre console, an armrest, a gear shifter tunnel, a hat shelf, a head restraint, and a ventilation.

5. The motor vehicle information system according to claims 1 to 4, wherein the at least one holographic information display projector (10) is mounted to the structural unit (3) by at least one of a snap fit and a suction cup.

6. The motor vehicle information system according to claims 1 to 5, wherein a light output of the at least one holographic information display projector (10) is directed towards at least one of a wind screen, a rear window, a side window, a rear mirror, a mirroring element arranged on the console, a mirroring element arranged on the middle console of the motor vehicle.

7. The motor vehicle information system according to one of the claims 1 to 6, wherein the at least one holographic information display projector (10) comprises a receiver (8) for receiving a hologram of a display indicating at least one information content,
a control unit (6) generating a control signal based on the received hologram,
a spatial light phase modulator (5) generating the received hologram based on the control signals, and
a coherent light source (4) emitting towards the spatial light phase modulator (5) for projecting a reconstructed hologram of the display to present the at least one information content.

8. The motor vehicle information system according to one of the claims 1 to 6, wherein the at least one holographic information display projector (10) comprises a housing (3) in which
a receiver (8) for receiving a hologram of a display indicating at least one information content,
a control unit (6) generating a control signal based on the received hologram,
a spatial light phase modulator (5) generating the received hologram based on the control signals, and
a coherent light source (4) emitting towards the spatial light phase modulator (5) for projecting a reconstructed hologram of the display to present the at least one information content are arranged.

9. The motor vehicle information system according to claim 8, wherein the housing (3) has a volume of less than 100 cm³.
